# EUROPEAN PATENT APPLICATION

(11) **EP 4 582 392 A1**
(43) Date of publication of application: **09.07.2025**
(21) Application number: 25150084.9
(22) Date of filing: 02.01.2025
(51) Int. Cl.: C02F 1/24, B03D 1/14, B03D 1/24

(54) **WATER TREATMENT SYSTEM AND METHOD TO TREAT WATER USING THE SAME**

(30) Priority: 08.01.2024 KR 20240002976
(71) Applicant: SK Innovation Co., Ltd., Seoul 03188 (KR)
(72) Inventor: LA, Yeon Hwa, 34124 Daejeon (KR); SONG, Jae Yang, 34124 Daejeon (KR); LEE, Chung Seop, 34124 Daejeon (KR); ROH, Hye Lin, 34124 Daejeon (KR)
(74) Representative: Prüfer & Partner mbB Patentanwälte · Rechtsanwälte

(57) **Abstract**

This disclosure is related to a water treatment system. The system comprises a flotation tank; a shell tube introduction part connected to the flotation tank and comprising a shell configured to supply a gas and at least one tube configured to supply untreated water, wherein each of the shell and the tube has a first part exposed to an outside of the flotation tank and a second part extending into the flotation tank; a microbubble forming means positioned on or adj acent to the second part of the shell; and a treated water outlet connected to the flotation tank and configured to allow treated water separated from solids in the flotation tank to be discharged therethrough.

## Description

### Field of the Invention

The present disclosure relates to a water treatment system and a method to treat a water using the system.

### Description of the Related Art

Wastewater is water that cannot be used as it is due to the liquid or solid water contaminants thereof. Wastewater includes domestic sewage, laundry wastewater, industrial wastewater, and agricultural/livestock wastewater in a broad sense.

Wastewater treatment is a process of removing adverse effects on rivers or seas into which wastewater flows by removing contaminants contained in wastewater or removing harmful effects. Wastewater treatment methods include physical treatment such as screening, filtration, precipitation, distillation, evaporation, and magnetic water treatment; and chemical treatment such as neutralization, oxidation-reduction, decomposition, coagulation, adsorption, flotation, extraction, ion exchange, stripping, and combustion/incineration. In addition, there are aerobic biological treatments such as an activated sludge method, a trickling filter method, an oxidation pond method, a rotating disk method, and a catalytic oxidation method, and anaerobic biological treatments such as a digestion method (a methane fermentation method) and a septic tank.

### Documents of Related Art

(Patent document 1) Korean Patent Application Publication No. 10-2017-0136027

### SUMMARY OF THE INVENTION

The present disclosure relates to a water treatment system and a method to treat water using the system.

According to one aspect of the present disclosure, there is provided a water treatment system, comprising: a flotation tank; a shell tube introduction part connected to the flotation tank and comprising a shell configured to supply a gas and at least one tube configured to supply untreated water, in which each of the shell and the tube has a first part exposed to an outside of the flotation tank and a second part extending into the flotation tank; a microbubble forming means positioned on or adjacent to the second part of the shell; and a treated water outlet connected to the flotation tank and configured to allow treated water separated from solids in the flotation tank to be discharged therethrough.

In one embodiment, the flotation tank may have a predetermined height, the shell tube introduction part may be connected to a lower part of the flotation tank, and the second part of each of the shell and the tube may extend from a bottom of the flotation tank to a position corresponding to at least 25% from the bottom of the height of the flotation tank.

In one embodiment, the shell tube introduction part may comprise a structure wherein the at least one tube configured to supply untreated water is arranged within the inside of the shell configured to supply a gas. In one embodiment, when the shell tube introduction part has one tube, the ratio of a diameter of the second part of the tube to a diameter of the second part of the shell is in a range of 1:1.1 to 1:3. In a further embodiment, when the shell tube introduction part has at least two tubes, the shell tube introduction part may comprise a plurality of tubes that are arranged within the shell so as to be spaced apart from each other.

In one embodiment, the shell tube introduction part may further comprise: a support installed between the shell and the tube and configured to maintain a separation distance therebetween.

In one embodiment, the position of the second end of the tube is higher than that of the second end of the shell.

In one embodiment, the microbubble forming means is positioned on the second part of the shell or adj acent to the second part of the shell.

In one embodiment, the microbubble forming means may comprise a membrane diffuser, an electroflotation device, a shear flotation (SF) device, a pressurized flotation device, or a combination thereof.

In one embodiment, the treated water outlet may be formed at a position lower than the second end of the shell, the second end of the tube, and/or the microbubble forming means.

In one embodiment, the water treatment system may further comprise: a floating solid collecting means.

According to another aspect of the present disclosure, there is provided a method to treat water using the water treatment system.

In one embodiment, the method comprises: introducing untreated water into the flotation tank through the tube; supplying gas through the shell from the outside into the flotation tank; forming microbubbles by passing the gas through the microbubble forming means and discharging the treated water to the outside of the flotation tank. In one embodiment, a ratio of an inflow rate of the untreated water to an inflow rate of the gas is in a range of 1:1 to 6:1.

In one embodiment, a size of microbubbles formed from the microbubble forming means is equal to or less than 100 µm.

In one embodiment, an outflow rate of the treated water discharged through the treated water outlet is equal to or less than an inflow rate of the untreated water introduced through the tube.

In one embodiment, it is possible to form bubbles with a long lifespan and a slow rising speed. In one embodiment, it is possible to suppress generation of a turbulent flow caused by bubbles. In one embodiment, it is possible to increase the adsorption rate between particles and bubbles. In one embodiment, it is possible to increase the flotation efficiency of particles in a water system.

### BRIEF DESCRIPTION OF THE DRAWINGS

FIG. 1 is a schematic view illustrating a water treatment system according to an embodiment.
FIG. 2 is a schematic view illustrating a water treatment system according to another embodiment of the present disclosure.

### DETAILED DESCRIPTION OF THE INVENTION

Hereinafter, the present disclosure will be described in detail with reference to the accompanying drawings. While the present disclosure may be embodied in many different forms, disclosed herein are specific illustrative embodiments thereof that exemplify the principles of the present disclosure. It should be emphasized that the present disclosure is not limited to the specific embodiments illustrated.

One aspect of the present disclosure provides a water treatment system and a method to treat water using the system. Untreated water, such as wastewater, is introduced into the water treatment system. The untreated water is separated into solids and treated water in a flotation tank, and these may be collected separately.

In the present disclosure, "untreated water" refers to fluid in which solids and water are mixed, and is not particularly limited as long as it is fluid in which the solids can be separated from water by flotation in a flotation tank. For example, the untreated water may be wastewater, and the wastewater may include domestic sewage, laundry wastewater, industrial wastewater, agricultural/livestock wastewater, or a combination thereof, as mentioned above. In addition, in the present disclosure, "treated water" refers to fluid resulting from separating solids from untreated water through a water treatment system provided in the present disclosure.

In this disclosure, "solids" refers to impurities that need be removed from water in order to purify wastewater and discharge it into a river or a sea. In this disclosure, "solids" may be used interchangeably with expressions such as "impurities", "contaminants", "insoluble particles", and "floating particles".

In this disclosure, the term "microbubble forming means" refers to a means or device capable of generating bubbles of the gas supplied into the flotation tank, which when filled with the water to be treated, forms bubbles in a suitable micron-size range, more suitably in a range up to about 0.1 mm (about 100 µm) size of bubbles (typically in the diameter size).

In this disclosure, when the microbubble forming means is positioned adjacent to the second part of the shell, the term "adjacent to" may be defined by arranging the microbubble forming means at a position where the shortest distance between the microbubble forming means and the second end of the shell is less than the shortest distance between the microbubble forming means and the second end of the tube.

In this disclosure, the terms "lower", "upper" and "upward" are basically based on a longitudinal direction of the system in respect of the fluid stream regardless whether a system having a certain longitudinal shape is arranged in an upward/vertical orientation or in a horizontal orientation or in another orientation.

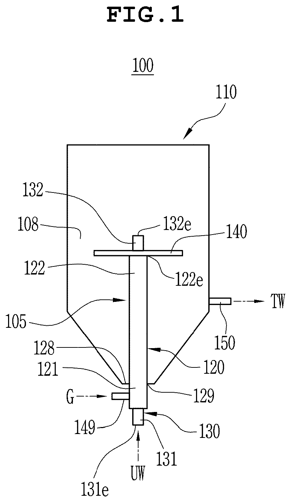

FIG. 1 is a schematic view illustrating a water treatment system 100 according to an embodiment. The water treatment system comprises a flotation tank 110; a shell tube introduction part comprising a shell 120 and at least one tube 130; a microbubble forming means 140; and a treated water outlet 150.

The flotation tank 110 has a predetermined internal space. As described later, the internal space may be filled with untreated water "UW" and a gas "G" supplied into the flotation tank 110. The gas G may be supplied inside the flotation tank 110 via gas inlet 149, shell 120, and microbubble forming means 140.Within the flotation tank 110, solids present in the untreated water UW may float upward and be separated from treated water TW.

In the present disclosure, the "shell tube introduction part" 105 refers to an introduction part through which the untreated water UW and the gas G are independently introduced into the flotation tank 110. The shell tube introduction part 105 comprises a first part being exposed to the outside of the flotation tank 110 and a second part extending into the flotation tank 110. The shell tube introduction part 105 comprises the shell 120 and the at least one tube 130. The shell 120 and the tube 130 have the form of a typical shell & tube device. Specifically, the shell 120 is formed to surround the tube 130. In some embodiments where a shell tube introduction part has one tube 130, the shell tube introduction part may be interpreted as a double tube form comprising the tube 130 as an inner tube and a shell 120 as an outer tube. For example, the shell 120 and the tube 130 may each have a cylindrical shape, however, the embodiment is not limited in this way and many other configurations may be used. For example, the shell 120 and the tube 130 may be rectangular cross-section tubes, or oval cross-section tubes.

The shell 120 and the tube 130 of the shell tube introduction part 105 have independent flow paths. Specifically, in the present disclosure, the gas G may flow through the shell 120 and the untreated water UW may flow through the tube 130. More specifically, the gas may flow through a gap (or space) formed between an outer surface of the tube 130 and an inner surface of the shell 120. Meanwhile, the untreated water flows through the tube 130. More specifically, the untreated water may flow through an empty space in the tube 130.

The shell tube introduction part 105 is connected to the flotation tank 110. The shell tube introduction part 105 may be positioned in an upright direction and may pass through an inlet opening 129 of the flotation tank. The shell 120 may be securely connected to the perimeter of the inlet opening 129. The tube 130 may be securely attached to the shell via any suitable means (NOT SHOWN) that do not substantially obstruct the flow path through the shell 120.

In the present disclosure, the water treatment system may be a bottom-up water treatment system. In the system, the gas and the untreated water may be supplied to a lower part of the flotation tank 110 and flow upward. Specifically, the shell tube introduction part may be connected to a lower end of the flotation tank 110. Here, the lower end may be a lower side surface or bottom surface 128 of the flotation tank 110. The flotation tank 110 according to the present disclosure may have a predetermined height. In the present disclosure, the "lower end" and "lower part" of the flotation tank 110 refer to a spatial part located at equal to or less than 50%, specifically, equal to or less than 40%, more specifically, equal to or less than 30%, more specifically, equal to or less than 25%, and even more specifically, equal to or less than 20% of the height of the flotation tank 110 from the bottom of the flotation tank 110. In addition, the "connected" refers to a state in which an outer surface of the shell 120 and outer surface and inner surface of the flotation tank 110 are in contact with each other in the thickness direction of the flotation tank 110.

Referring again to FIG. 1, the shell 120 has a first part 121 exposed to the outside of the flotation tank 110 and a second part 122 extending into the flotation tank 110. The gas may be supplied from the outside through the first part 121 exposed to the outside. In one embodiment, the first part 121 of the shell 120 may comprise a gas inlet 149 through which the gas G is introduced from the outside to the shell 120 and through the shell 120 and the microbubble forming means 140 into the space 108 of the flotation tank 110.

The shell 120 may extend through an outer surface and an inner surface of the flotation tank 110 into the internal space 108 of the flotation tank 110. In some embodiments, the second part 122 of the shell 120 may extend from the bottom of the flotation tank 110 to a position corresponding to 20% to 50% from the bottom of the height of the flotation tank 110, specifically 20% to 40%, more specifically 25% to 35%, and most specifically 30%. In order to collect the treated water TW from the flotation tank 110 by separating it from the untreated water UW that is continuously introduced during actual operation of the water treatment system 100, the treated water TW may be collected from the flotation tank 110 via a treated water outlet 150 which may be located at a position lower than the second end 122e of the shell 120.

As the gas supplied into the flotation tank 110 through the shell 120 according to the present disclosure, as described below, a gas capable of easily generating microbubbles within the flotation tank 110 and does not dissolve well in wastewater may be used. For example, the gas may include air, oxygen, nitrogen, or a combination thereof.

In addition, referring to FIG. 1, the tube 130 also has a first part 131 extending to the outside of the flotation tank 110 and a second part 132 extending inside the flotation tank 110. A first end 131e of the tube 130 may be exposed to the outside of the flotation tank 110 and may not be surrounded by the shell 120. A second end 132e of the tube 130 may be exposed to the inside of the flotation tank 110 and may not be surrounded by the shell 120. The untreated water may be supplied from the outside through the first end 131e of the tube 130 exposed to the outside. In one embodiment, the first end 131e of the tube 130 may comprise an untreated water inlet through which the untreated water is introduced from the outside.

The tube 130 may also extend through the outer surface and the inner surface of the flotation tank 110 into the internal space 108 of the flotation tank 110. In some embodiments, the second end of the tube 130 may extend from the bottom of the flotation tank 110 to a position corresponding to at least 20% to 50% from the top of the height of the flotation tank 110, specifically 20% to 40%, more specifically 25% to 35%, and most specifically 30%. In order to collect the treated water from the flotation tank 110 by separating it from the untreated water that is continuously introduced during actual operation of the water treatment system, the treated water may be collected from the flotation tank 110 at a position lower than the second end 132e of the tube 130.

In addition, the solids in the untreated water introduced through the tube 130 may float through bubbles derived from the gas introduced through the shell 120. From the perspective of flotation efficiency of the solids, the position of the second end 132e of the tube 130 may be higher than that of the second end 122e of the shell 120.

The shell tube introduction part according to the present disclosure may comprise at least one tube 130. In one embodiment, the shell tube introduction part may comprise at least two tubes 130. A plurality of tubes are arranged within the shell 120 so as to be spaced apart from each other. The use of the plurality of tubes 130 may increase the dispersibility of the untreated water introduced into the flotation tank 110, thereby contributing to faster flotation of the solids.

In another embodiment, the shell tube introduction part may have one tube 130. Specifically, the shell tube introduction part may have one tube 130 and one shell 120 having cross sections that are concentric with each other. When one tube 130 is used, the gas may be relatively more densely packed in the circumference of the second end of the tube 130, thereby making it easier for microbubbles derived from the gas to form a so-called microbubble curtain. In this case, the shell and the tube may be coaxially aligned in a longitudinal direction. As a result, the use of one tube 130 may contribute to further increasing the purity of the treated water.

In one of embodiments in which the shell tube introduction part has one tube 130, the ratio of the diameter of the second part 132 of the tube 130 to the diameter of the second part 122 of the shell 120 may be in a range of 1:1.1 to 1:3. Specifically, the ratio may be in a range of 1:1.2 to 1:2.8, more specifically 1:1.2 to 1:2. When the ratio is less than the above-described range, a problem of reducing a flotation effect using microbubbles may arise, and also a problem of reducing the efficiency of the treatment may arise. When the ratio exceeds the above-described range, a problem of reducing economic efficiency may arise.

In this regard, a difference in supply rates of the gas and the untreated water may also affect the performance of the water treatment system. In one embodiment, the ratio of the inflow rate of the untreated water to the inflow rate of the gas may be in a range of 1:1 to 6:1, and specifically the ratio may be in a range of 1.5:1 to 3:1. When the ratio is less than the above-described range, a problem of reducing a flotation effect using microbubbles being may arise, and also a problem of reducing the efficiency of the treatment may arise. When the ratio exceeds the above-described range, a problem of reducing economic efficiency may arise.

As described above, the shell 120 and the tube 130 provide independent flow paths for the gas and the untreated water, respectively. For this purpose, a predetermined separation distance may be maintained between the shell 120 and the tube 130. In one embodiment, the shell tube introduction part may further comprise a support installed between the shell 120 and the tube 130 to maintain the separation distance therebetween.

The introduction part of this structure used in the water treatment system according to the present disclosure increases distribution of the gas around the untreated water introduced into the flotation tank 110, thereby making it possible to promote flotation of the solids in the untreated water regardless of the width and height of the flotation tank 110.

The water treatment system according to the present disclosure comprises the microbubble forming means 140. As illustrated in FIG. 1, the microbubble forming means 140 is positioned on the second end 122e of the shell 120 or adj acent to the second end 122e of the shell 120. The gas is released from the second end 122e of the shell 120 into the internal space of the floatation tank 110 and forms microbubbles by passing through the microbubble forming means 140. The microbubbles thus formed may form a gas curtain under the untreated water discharged from the second end 132e of the tube 130 into the internal space 108 of the flotation tank 110. The gas curtain may prevent sedimentation of the solids in the untreated water and promote flotation of the solids.

In one embodiment, the size of the microbubbles formed from the microbubble forming means 140 may be equal to or less than 100 µm. Specifically, the size of the microbubbles may be in the range of 1 to 100 µm such as 1 to 50 µm, more specifically 5 to 100 µm such as 5 to 50 µm, more specifically 10 to 100 µm such as 10 to 40 µm, and even more specifically 20 to 100 µm such as 20 to 40 µm. For example, the size of the microbubbles can be measured with a transient wet bubble/particle size analysis system. Through the synchronization of a high-speed camera and a nanosecond pulsed laser, the analysis system can image the contaminant particles and/or bubbles present in the liquid, and analyze the size distribution and shape of the particles and/or bubbles. When the size of the microbubbles is equal to or less than 100 µm, it is possible to float the solids by slowly rising them to a liquid surface in the flotation tank 110 compared to when the size is greater than 100 µm. In addition, the microbubbles have a relatively long bubble life of about 1 to 2 minutes and a larger surface area, which is advantageous in terms of flotation efficiency of the solids. When the size of the microbubbles exceeds the above range, the bubbles may rise too fast and cause a turbulent flow during rising, resulting in a problem of reducing the flotation efficiency of the solids. On the other hand, when the size of the microbubbles is less than the above range, the bubbles may rise too slow and stay in the water, resulting in a problem of reducing the flotation efficiency of the solids.

In the present disclosure, the microbubble forming means 140 is not particularly limited as long as it is a means capable of positioning adjacent to the second end 122e of the shell 120 and forming microbubbles of the above size. In one embodiment, the microbubble forming means 140 may comprise a membrane diffuser, an electroflotation device, a shear flotation (SF) device, a pressurized flotation device, or a combination thereof. Specifically, the membrane diffuser may comprise an air flotation (AF)-ceramic membrane. In addition, the shear flotation (SF) device may comprise an SF-internal circulation device. In addition, the pressurized flotation device may comprise a dissolved air flotation (DAF)-pressurized tank type device and a DAF-pressurized pump type device.

The water treatment system according to the present disclosure comprises the treated water outlet 150. The treated water outlet 150 is connected to the flotation tank 110 and may discharge the treated water "TW" separated from the solids in the flotation tank 110 to the outside. In order to collect the treated water from the flotation tank 110 by separating it from the untreated water that is continuously introduced during actual operation of the water treatment system, the treated water outlet 150 may be formed at a position lower than the second end 122e of the shell 120, the second end 132e of the tube 130, and/or the microbubble forming means 140. More specifically, the treated water outlet 150 may be connected to the flotation tank 110 at a position lower than the second end of the shell 120, the second end of the tube 130, and the microbubble forming means 140.

The outflow rate of the treated water discharged through the treated water outlet 150 may be controlled by considering the inflow rate of the introduced untreated water. In one embodiment, the outflow rate of the treated water discharged through the treated water outlet 150 may be equal to or less than the inflow rate of the untreated water introduced through the tube 130. The outflow rate of the treated water that is faster than the inflow rate of the untreated water may cause a problem of reducing the purity of the treated water.

The solids floating to the liquid surface in the flotation tank 110 together with the microbubbles may be recovered. In one embodiment, the water treatment system may further comprise a floating solid recovery means. In the present disclosure, the floating solid collecting means is not particularly limited. For example, the floating solid collecting means may comprise a skimmer designed to skim-off any solids moved to the surface of the water. Specifically, the air bubbles formed by the microbubble forming means 140 may cause the contaminant solids found in the untreated water UW to rise to the surface of the water, creating a layer of floating sludge. A mechanical skimmer, usually consisting of a rotating arm or conveyor, may then gently move across the surface of the water. The skimmer, for example, may push the floating sludge towards a collection trough or scraper. The collected sludge may then be removed from the system for further processing, disposal, or sometimes recovery, depending on the type of contaminant.

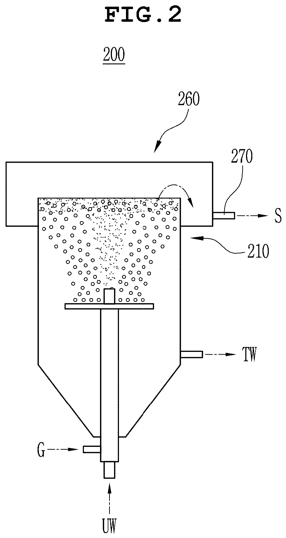

FIG. 2 is a schematic view illustrating a water treatment system 200 according to another embodiment of the present disclosure. For another example, as shown in FIG. 2 , the floating solid collecting means may comprise an overflow chamber 260. The contaminant solids raised to the surface of the water by microbubbles overflow the flotation tank 210 with a continuous supply of untreated water UW. The overflowed solids are collected in the overflow chamber 260. In an embodiment, the diameter of the overflow chamber 260 can be 24 times larger than the diameter of the flotation tank 210. Further, the height of the overflow chamber 260 may be 1/5 to 1/2 times the height of the flotation tank 210.

In another embodiment, the flotation tank 110 may comprise a floating solid outlet (not shown). The floating solid outlet may be positioned at an upper end of the flotation tank 110. More specifically, the floating solid outlet may be formed a position higher than the second end 122e of the shell 120, the second end 132e of the tube 130, and/or the microbubble forming means 140.

In another embodiment, as shown in FIG. 2, the floating solid collecting means may further comprise a floating solid outlet 270. The collected solids S in the overflow chamber 260 may be discharged to the outside through the floating solid outlet 270.

The water treatment system according to the present disclosure as described above has a simple structure compared to conventional water treatment systems, thereby achieving size reduction and providing easier wastewater treatment.

Although the preferred embodiment of the present disclosure has been disclosed for illustrative purposes, those skilled in the art will appreciate that various modifications, additions, and substitutions are possible, without departing from the scope of the present disclosure as disclosed in the accompanying claims.

## Claims

1. A water treatment system, comprising:
a flotation tank (110);
a shell tube introduction part connected to the flotation tank (110) and comprising a shell (120) configured to supply a gas and at least one tube (130) configured to supply untreated water, wherein each of the shell (120) and the tube (130) has a first part (121, 131) exposed to an outside of the flotation tank (110) and a second part extending into the flotation tank;
a microbubble forming means (140) positioned on or adjacent to the second part of the shell (120); and
a treated water outlet (150) connected to the flotation tank (110) and configured to allow treated water separated from solids in the flotation tank (110) to be discharged therethrough.

2. The water treatment system of claim 1, wherein the flotation tank (110) has a predetermined height,
the shell tube introduction part is connected to a lower part of the flotation tank (110), and
the second part (122) of each of the shell (120) and the tube (130) extends from a bottom of the flotation tank (110) to a position corresponding to at least 25% from the bottom of the height of the flotation tank (110).

3. The water treatment system of claim 1 or 2, wherein the at least one tube (130) configured to supply untreated water is arranged within the inside of the shell configured to supply a gas,
preferably wherein a ratio of a diameter of the second part of the tube (130) to a diameter of the second part of the shell (120) is in a range of 1:1.1 to 1:3, when the shell tube introduction part has one tube (130),
or wherein a plurality of tubes (130) are arranged within the shell (120) so as to be spaced apart from each other when the shell tube introduction part has at least two tubes.

4. The water treatment system of any one of the preceding claims, wherein the shell tube introduction part further comprises a support installed between the shell (120) and the tube (130) and configured to maintain a separation distance therebetween.

5. The water treatment system of any one of the preceding claims,
wherein the position of the second end (132e) of the tube (130) is higher than that of the second end (122e) of the shell (120).

6. The water treatment system of any one of the preceding claims,
wherein the microbubble forming means (140) is positioned on the second part (122) of the shell (120) or adj acent to the second part (122) of the shell (120).

7. The water treatment system of any one of the preceding claims,
wherein the microbubble forming means (140) comprises a membrane diffuser, an electroflotation device, a shear flotation (SF) device, a pressurized flotation device, or a combination thereof.

8. The water treatment system of any one of the preceding claims, wherein the treated water outlet (150) is formed at a position lower than the second end (122e) of the shell (120), the second end (132e) of the tube (130), and/or the microbubble forming means (140).

9. The water treatment system of any one of the claims, further comprising:
a floating solid collecting means.

10. A method to treat water using the water treatment system according to any one of the preceding claims.

11. The method of claim 10, comprising:
introducing untreated water into the flotation tank (110) through the tube (130);
supplying gas through the shell (120) from the outside into the flotation tank (110);
forming microbubbles by passing the gas through the microbubble forming means (140); and
discharging the treated water to the outside of the flotation tank (110).

12. The method of claim 10 or 11,
wherein a ratio of an inflow rate of the untreated water to an inflow rate of the gas is in a range of 1:1 to 6:1.

13. The method of any one of claims 10 to 12,
wherein a size of microbubbles formed from the microbubble forming means is equal to or less than 100 µm.

14. The method of any one of claims 10 to 13,
wherein an outflow rate of the treated water discharged through the treated water outlet (150) is equal to or less than an inflow rate of the untreated water introduced through the tube (130).
